Europäisches Patentamt

European Patent Office

Office européen des brevets

(11) Veröffentlichungsnummer: **0 503 721 A1**

## EUROPÄISCHE PATENTANMELDUNG

(21) Anmeldenummer: **92200628.3**

(51) Int. Cl.5: **H02P 6/02**

(22) Anmeldetag: **27.02.92**

(30) Priorität: **08.03.91 DE 4107373**

(43) Veröffentlichungstag der Anmeldung:
**16.09.92 Patentblatt 92/38**

(84) Benannte Vertragsstaaten:
**PT**

(71) Anmelder: **Deutsche Thomson-Brandt GmbH
Hermann-Schwer-Strasse 3 Postfach 1307
W-7730 Villingen-Schwenningen(DE)**

(72) Erfinder: **Gleim, Günter
Oberer Sonnenbühl 22
W-7730, VS-Villingen 22(DE)**

(54) **Halbleiterscheiben-Reinigungsverfahren unter Benutzung eines Mischers und Vorrichtung dafür.**

(57) 1. Es wird ein System, bestehend aus einem Verfahren und einer geeigneten Vorrichtung, zur Abschwächung von Störimpulsen bei einer Ansteuerung eines Elektromotors vorgestellt.

2.1 Die Anzahl an Mitteln zu Entstörung soll gegenüber derjenigen bei bekannten Systemen reduziert werden.

2.2 Die Reduzierung der Anzahl an Mitteln zur Entstörung wird erreicht, indem in Abhängigkeit vom Ansteuersignal des Motors eine verminderte Anzahl von Mitteln zur Entstörung derart geschaltet wird, daß bei Übergängen, in denen Störimpulse verursacht werden, die Mittel zur Entstörung zumindest teilweise entsprechend geschaltet sind.

2.3 Das erfindungsgemäße System läßt sich bei einer Ansteuerung von Elektromotoren mit einem oder mehreren Strängen verwenden.

FIG.2a

EP 0 503 721 A1

Die Erfindung betrifft ein Verfahren zur Abschwächung von Störimpulsen bei einer Ansteuerung eines Elektromotors gemäß dem Oberbegriff des Hauptanspruchs, sowie eine bevorzugte zur Durchführung des erfindungsgemäßen Verfahrens geeignete Vorrichtung gemäß dem Oberbegriff des ersten Sachanspruchs.

Es ist bekannt, beispielsweise aus dem SGS Datenbuch "Motion Control Application Manual"; Jan. 1987, S. 641 - 647 (Three-Phase Brushless DC Motor Driver L6231), daß zu einer Ansteuerung von mehrsträngigen Elektromotoren dessen einzelne Stränge zyklisch bestromt werden.

Dazu verwendete Ansteuersignale sind üblicherweise dergestalt, daß jedem der Stränge in Abhängigkeit von der Winkelposition eines Rotors des Elektromotors, im folgenden kurz Position p des Motors genannt, ein Strom eingeprägt wird. Dessen Richtung ändert sich in Abhängigkeit von der Position p. Zwischen den Zeiträumen, in denen ein entsprechender Strom eingeprägt wird, sind Zeiträume vorgesehen, in denen die einzelnen Stränge stromlos sind. Bezeichnet man den Zustand der ersten Stromrichtung mit "+1", den der zweiter mit "-1", sowie den stromlosen Zustand mit "0", so ergeben sich für ein erstes betrachtetes Ansteuersignal für einen ersten Strang zyklisch die Zustände +1, 0, -1, 0, +1, usw.

Die weiteren Ansteuersignale der anderen Stränge weisen in Abhängigkeit von deren Anzahl jeweils eine auf die Position p bezogene Phasendifferenz gegenüber dem ersten Ansteuersignal auf. Auch sie weisen üblicherweise zyklisch die Zustände +1, 0, -1, 0, +1, usw. auf.

Besonders bei übergängen zwischen den Zuständen +1, 0 und -1, 0 treten jedoch starke Störimpulse auf, die durch geeignete Mittel zur Entstörung gedämpft werden müssen.

In dem genannten SGS Datenbuch sind als die genannten Mittel zur Entstörung einerseits geeignete Kombinationen von Widerständen und Kondensatoren, sogenannte RC-Glieder, vorgeschlagen worden, die hinter Endstufen für die Ansteuerung der einzelnen Motorstränge extern, d.h. außerhalb der eigentlichen Ansteuerschaltung, die als integrierte Schaltung realisiert werden kann, angeordnet werden. Andererseits sind in dem SGS Datenbuch als Mittel zur Entstörung Integratoren mit geeigneten Rückkopplungskondensatoren angegeben, die vor Eingängen der Endstufen angeordnet sind.

Diese Mittel können als Teil der Ansteuerschaltung realisiert werden. Bei einer Realisierung als Teil einer integrierten Schaltung beanspruchen sie jedoch viel Platz und setzen damit die Integrationsdichte herab.

Es ist Aufgabe der vorliegenden Erfindung, bei einer Ansteuerung der genannten Art den Bedarf an Mitteln zur Entstörung herabzusetzen ohne die Dämpfung auftretender Störimpulse zu vermindern.

Diese Aufgabe wird gelöst durch ein Verfahren gemäß dem Hauptanspruch und durch eine zur Durchführung des erfindungsgemäßen Verfahrens geeignete Vorrichtung gemäß dem ersten Sachanspruch.

Erfindungsgemäß werden nicht für jeden Strang eines anzusteuernden Motors alle Mittel zur Entstörung vorgesehen, sondern die Anzahl dieser Mittel wird reduziert und bei Bedarf werden Mittel zur Entstörung derart mit Motoransteuermitteln verbunden, daß auftretende Störspitzen gedämpft werden.

Durch die reduzierte Anzahl an Mitteln zur Enstörung ist es vertretbar, daß sie extern, das heißt außerhalb einer eigentlichen Ansteuerschaltung, die als integrierte Schaltung ausgeführt sein kann, angeordnet werden. Dadurch können bei Verwendung von Ansteuerschaltungen desselben Models die Mittel zur Entstörung für verschiedene Arten von anzusteuernden Motoren auf einfache Weise angepaßt werden. Dadurch kann weiterhin die jeweilige Ansteuerung optimiert werden und Kosten, wie Entwicklungskosten, Lagerkosten, usw. , können eingespart werden.

Vorteilhafte Weiterbildungen der Erfindung sind durch die Unteransprüche gekennzeichnet.

Bei einer möglichen Realisierung der Mittel zur Entstörung sind diese derart realisiert, daß sie durch Ansteuersignale ihre Eigenschaften verändern. Das geschieht bevorzugterweise in der Art, daß Verstärkerstufen mit niederohmigen Ausgängen ein Eingangssignal mit vorgegebenem Verlauf zugeführt wird. Der Verlauf der entsprechenden Ausgangssignale bestimmt den Verlauf der Signale, die an Motoransteuermitteln anliegen, solange eine entsprechende Verbindung besteht.

Dadurch wird eine Verbesserung der Abschwächung von Störimpulsen urd ein geringer Aufwand bei der Umschaltung der Mittel zur Entstörung erzielt.

Die vorliegende Erfindung wird nachstehend an Hand der in der Zeichnung dargestellten Ausführungsbeispiele erläutert. Dabei zeigen:

Fig. 1, 1b     bekannte Vorrichtungen zur Ansteuerung von dreisträngigen Elektromotoren mit Mitteln zur Entstörung,

Fig. 2a, 2b     bevorzugte Ausführungsbeispiele der erfindungsgemäßen Vorrichtung zur Abschwächung von Störimpulsen zusammen mit einer Vorrichtung zur Ansteuerung eines dreisträngigen Elektromotors,

Fig. 3     Signale eines Sensors zur Bestimmung der Posi tion p des Elektromotors,

Fig. 4a...4c     Signale zur Ansteuerung des Elektromotors,

Fig. 5     Verlauf einer an einem Motorstrang anliegenden Spannung,

2

Fig. 6a, 6b      Signale zur Umschaltung von Mitteln zur Entstörung gemäß bevorzugten Ausführungsbeispielen,

Fig. 7a, 7b      eine gebräuchliche Realisierung einer Endverstärkerstufe und geeignete Ansteuersignale,

Fig. 8, 9,10      Bevorzugte Varianten des Ausführungsbeispiels gemäß Fig. 2b für Endverstärkerstufen gemäß Fig. 7,

Fig. 11      Ansteuersignale bei der Variante gemäß Fig. 10.

Bevor auf die Beschreibung das Ausführungsbeispiels näher eingegangen wird, sei darauf hingewiesen, daß die in den Figuren einzeln dargestellten Blöcke lediglich zum besseren Verständnis der Erfindung dienen. Üblicherweise sind einzelne oder mehrere dieser Blöcke zu Einheiten zusammengefaßt. Diese können in integrierter oder Hypridtechnik oder als programmgesteuerter Mikrorechner, bzw. als Teil eines zu seiner Steuerung geeigneten Programmes realisiert sein.

Weiterhin sei darauf hingewiesen, daß die in den einzelnen Stufen enthaltene Elemente auch getrennt ausgeführt werden können.

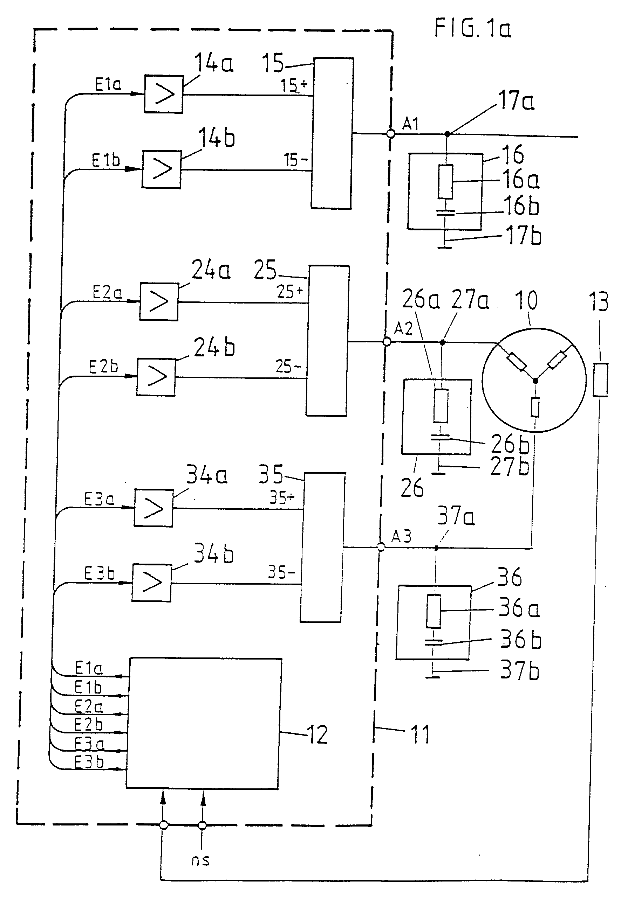

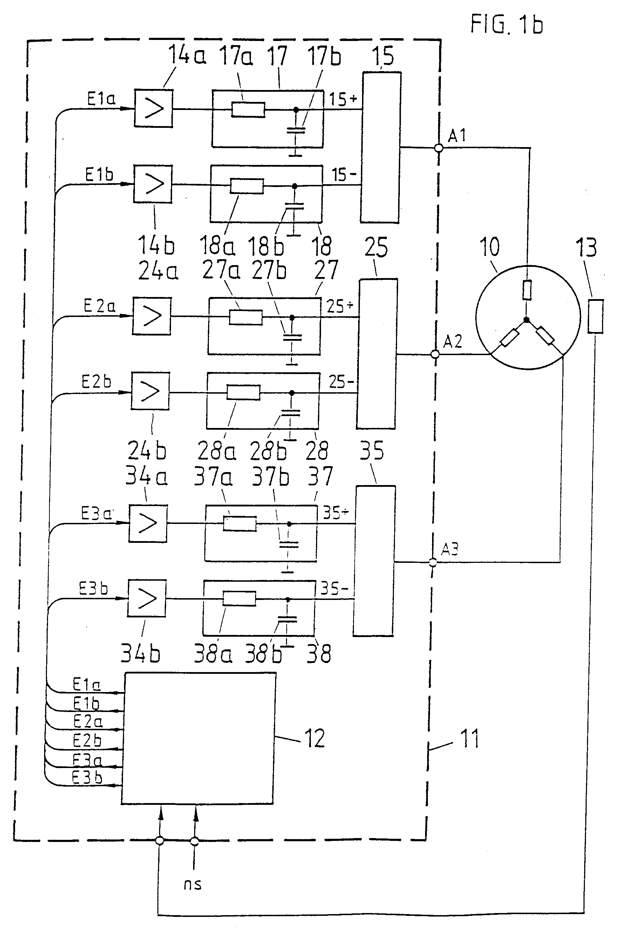

In Figur 1a ist eine erste bekannte Anordnung zur Ansteuerung eines dreisträngigen Elektromotors dargestellt.

Ein dreisträngiger Elektromotor 10 wird von einer Ansteuervorrichtung 11 angesteuert. Diese Ansteuervorrichtung 11 enthält ein elektronisches Steuergerät 12, das Signale eines Sensors 13 erhält, die ein Maß sind für die Drehzahl und/oder Position P des Motors 10. Ferner erhält das elektronische Steuergerät 12 Ansteuersignale zur Vorgabe einer Solldrehzahl ns und gibt jeweils Ansteuersignale E1a, E1b, E2a, E2b, E3a, E3b ab an Eingänge von Vorverstärkerstufen 14a, 14b, 24a, 24b, 34a, 34b.

Der Ausgang der ersten Vorverstärkerstufe 14a ist verbunden mit einem Pluseingang 15+ einer ersten Endverstärkerstufe 15 und der Ausgang der zweiten Vorverstärkerstufe 14b ist verbunden mit einem Minuseingang 15- der ersten Endverstärkerstufe 15.

Analog sind die Ausgänge der Vorverstärkerstufen 24a, 24b und 34a, 34b mit Eingängen von einer zweiten Endverstärkerstufe 25 bzw. einer dritten Endverstärkerstufe 35 verbunden.

Der Ausgang der ersten Endverstärkerstufe 15 ist mit einem ersten Strang des Motors 10 verbunden. Zusätzlich führt dieser Ausgang zu einem ersten Anschlußpunkt 17a, an dem erste Mittel 16 zur Entstörung, bestehend aus einer Reihenschaltung eines ersten Widerstandes 16a und eines ersten Kondensators 16b, angeschlossen sind. Das freie Ende des Kondensators 16b führt zu einem ersten Masseanschlußpunkt 17b, der an Masse liegt.

Die Ausgänge der Endverstärkerstufen 25, 35 führen zu einem zweiten bzw. dritten Strang des Elektromotors 10 und zu zweiten bzw. dritten Anschlußpunkten 27a, 37a An diese sind zweite Mittel 26 bzw. dritte Mittel 36 zur Entstörung, bestehend aus einem zweiten Widerstand 26a und einem zweiten Kondensator 26b, bzw. aus einem dritten Widerstand 36a und einem dritten Kondensator 36b, analog wie an dem Ausgang der ersten Endverstärkerstufe 15 angeschlossen.

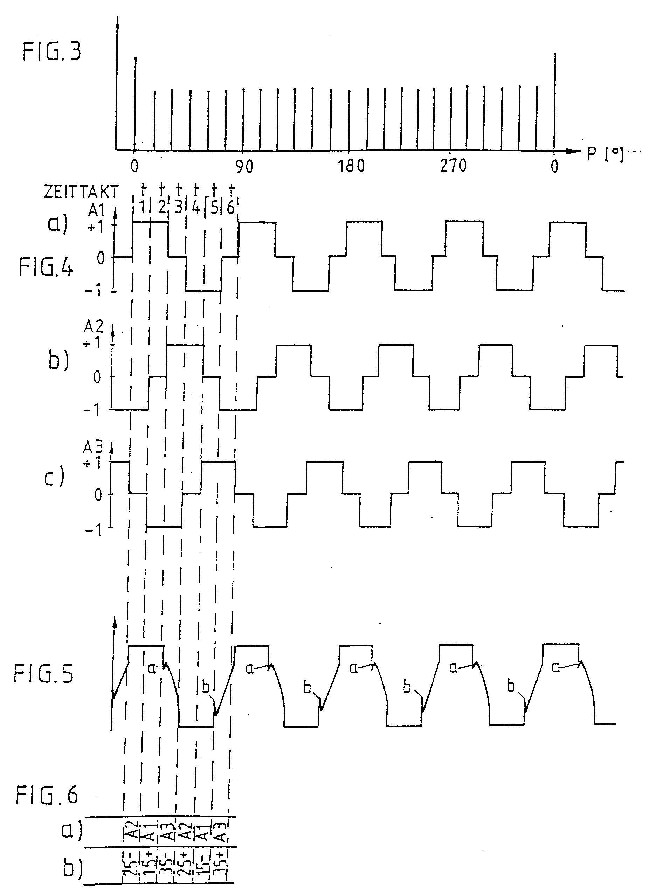

Die Funktionsweise der Anordnung gemäß Figur 1a wird mit Hilfe der Figuren 3 und 4 erläutert. In Figur 3 ist das Ausgangssignal des Sensors 13 in Abhängigkeit von der Position p des Motors dargestellt. Bei einer Grundstellung des Motors 10 (p = 0) sei eine besondere Marke angebracht, die zu einem entsprechenden Ausgangssignal führt. Die weiteren Marken sind dergestalt, daß der Sensor 13 alle 15 Grad einen Ausgangsimpuls abgibt.

Das elektronische Steuergerät 12, dem das Signal des Sensors 13 zugeführt wird, steuert die Vorverstärkerstufen 14a, 14b, 24a, 24b, 34a, 34b durch die Signale E1a, ..., E3b gemäß Tabelle 1 an.

Das führt zu Ausgangssignalen A1, A2, A3, deren Stromwerte von dem gewünschten Drehmoment abhängen, der Endverstärkerstufen 15, 25, bzw. 35 gemäß den Figuren 4a, 4b bzw. 4c. Diese Motoransteuerung ist bekannt, so daß auf sie zunächst nicht weiter eingegangen soll.

Tabelle 1

| (1 bedeutet Ansteuersignal an Vorverstärkerstufe) | | | | | | |
|---|---|---|---|---|---|---|
| Ansteuersignal | Zeittakt | | | | | |
| | t1 | t2 | t3 | t4 | t5 | t6 |
| E1a | 1 | 1 | 0 | 0 | 0 | 0 |
| E1b | 0 | 0 | 0 | 1 | 1 | 0 |
| E2a | 0 | 0 | 1 | 1 | 0 | 0 |
| E2b | 1 | 0 | 0 | 0 | 0 | 1 |
| E3a | 0 | 0 | 0 | 0 | 1 | 1 |
| E3b | 0 | 1 | 1 | 0 | 0 | 0 |

In Figur 5 ist die an dem ersten Strang des Motors 10 anliegende Spannung in Abhängigkeit von der Position p bei einer Ansteuerung der genannten Art dargestellt. Man erkennt deutlich, daß bei übergängen von Zuständen des Ausgangssignals A1 der ersten Endverstärkerstufe 15 von +1 nach 0 und von -1 nach 0 Störspitzen a bzw. b auftreten, die durch die ersten Mittel 16 zur Ertstörung stark gedämpft sind. Ohne eine solche Dämpfung wären die Störspitzen a, b wesentlich stärker ausgebildet.

Figur 1b zeigt eine zweite bekannte Ansteuervorrichtung zur Ansteuerung des Motors 10. Mittel, die die gleiche Funktion ausüben wie solche des Beispiels der Figur 1a sind mit gleichen Bezugszahlen versehen und auf sie soll in der folgenden Beschreibung nur in so weit eingegangen werden, wie es für das Verständnis der Erfindung, die mit Hilfe anschließender Figuren beschrieben werden wird, wesentlich ist.

Der wesentliche Unterschied der Ansteuerschaltung der Figur 1b gegenüber der der Figur 1a ist, daß Mittel zur Entstörung mit den Eingängen der Endverstärkerstufen 15, 25, 35 verbunden sind.

So ist an dem Pluseingang 15+ der Endverstärkerstufe 15 ein Mittel 17 zur Entstörung angeordnet, das aus einem Widerstand 17a und einem Kondensator 17b besteht. Der Widerstand 17a ist mit seinem einen Ende an den Ausgang der ersten Vorverstärkerstufe 14a angeschlossen und mit seinem anderen Ende zum einen an den ersten Anschluß des Kondensators 17b und zum anderen an den Pluseingarg 15+ der ersten Endverstärkerstufe 15. Der zweite Anschluß des Kondensators 17b ist auf Masse geschaltet. Analog sind Mittel 18 zur Entstörung, die gebildet wurden aus dem Widerstand 18a und dem Kondensator 18b, an dem Minuseingang 15- der Endverstärkerstufe 15 angeschlossen.

Ähnliches gilt für Mittel 27, 28, 37, 38 zur Entstörung, die an den Pluseingängen 25+, 35+ bzw. Minuseingängen 25-, 35-der Endverstärkerstufen 25 und 35 vorgesehen sind.

Die Ansteuerimpulse der Vorrichtung gemäß Figur 1b sind gleich der der Figur 1a. Auf diese soll an dieser Stelle nicht weiter eingegangen werden.

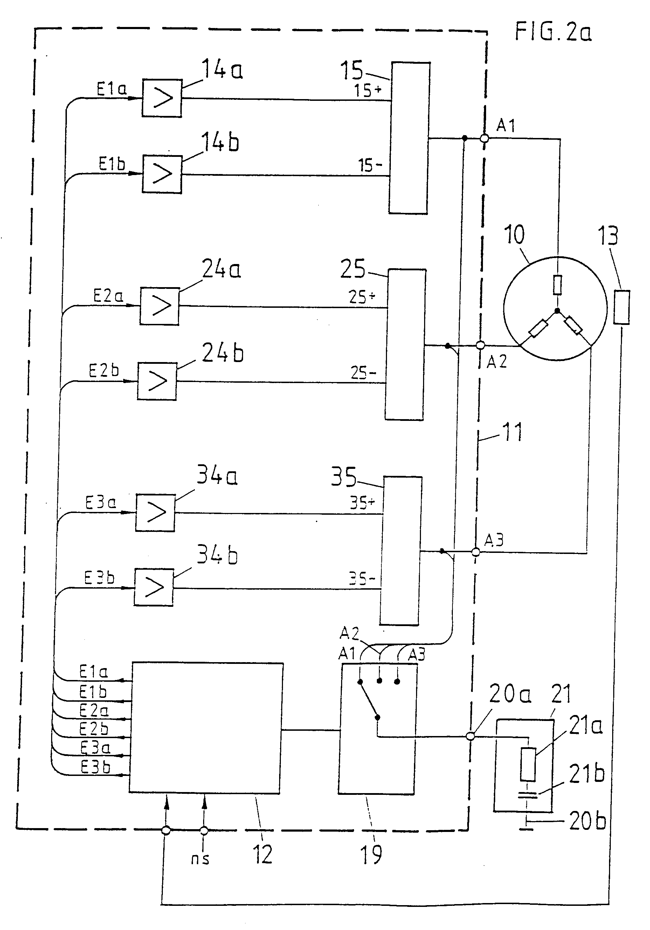

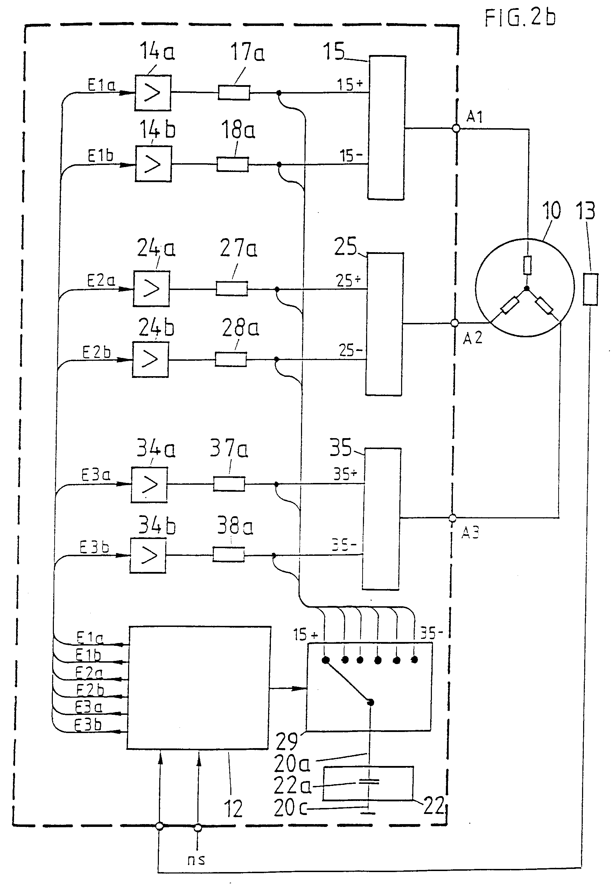

Bevorzugte Ausführungsbeispiele der Erfindung sind in den Figuren 2a und 2b dargestellt. Dabei sind Mittel, die die gleiche Funktion ausüben wie in den bereits genannten Ansteuervorrichtungen der Figuren 1a und 1b mit den gleichen Bezugszahlen bezeichnet und auf sie soll im folgenden nur insofern eingegangen werden, wie es für das Verständnis der vorliegenden Erfindung notwendig ist.

Das Ausführungsbeispiel gemäß Figur 2a weist eine Umschaltvorrichtung 19 auf, die Steuersignale von dem elektronischen Steuergerät 12 über einen Steuereingang erhält. Eingänge der Umschaltvorrichtung 19 sind mit den Ausgängen der Endverstärkerstufen 15, 25, 35 verbunden und der Ausgang der Umschaltvorrichtung 19 führt zu einem Anschlußpunkt 20a, der in diesem Ausführungsbeispiel als Anschlußklemme ausgebildet ist. An diese Anschlußklemme werden extern, das heißt außerhalb der eigentlichen Ansteuerschaltung, Mittel 21 zur Entstörung, in diesem Ausführungsbeispiel bestehend aus einer Reihenschaltung eines Widerstandes 21a und eines Kondensator 21b, angeschlossen. Das freie Ende des Kondensators 21b führt zu einem Masseanschlußpunkt 20b, der mit Masse verbunden ist.

Die Funktion des Ausführungsbeispiels gemäß der Figur 2a wird mit Hilfe der Figur 6a erläutert. Dort sind Schaltzustände der Umschaltvorrichtung 19 in Abhängigkeit der Motor-Ansteuersignale A1, A2, A3, die an den Ausgängen der Endverstärkerstufen 15, 25, bzw. 35 anliegen, angegeben.

Wesentlich ist, daß immer derjenige Ausgang, dessen Ansteuersignal einen Übergang aufweist von -1 zu 0 oder von +1 zu 0, an die Mittel 21 zur Entstörung angeschlossen ist.

Die Ansteuerimpulse des elektronischen Steuergerätes 12 an die Umschaltvorrichtung 19 sind aus der Tabelle 2 ersichtlich.

4

Tab. 2

| (1 bedeutet Verbindung mit Anschlußpunkt 20a) | | | | | | |
|---|---|---|---|---|---|---|
| Ansteuersignal | Zeittakt | | | | | |
| | t1 | t2 | t3 | t4 | t5 | t6 |
| A1 | 0 | 1 | 0 | 0 | 1 | 0 |
| A2 | 1 | 0 | 0 | 1 | 0 | 0 |
| A3 | 0 | 0 | 1 | 0 | 0 | 1 |

Sowohl aus Figur 6a, als auch aus Tabelle 2 ist ersichtlich, daß während des Zeittaktes t1 das Ansteuersignal A2 und damit der Ausgang der Endverstärkervorrichtung 25 mit den Mitteln 21 zur Entstörung verbunden wird, zu dem Zeitpunkt t2 das Ansteuersignal A1, usw. Dabei ist zu beachten, daß das Umschalten erst dann geschieht, wenn die durch die Mittel zur Entstörung abgerundeten Ansteuersignale A1, A2 ihren gewünschten Zustand erreicht haben.

Ein zweites Ausführungsbeispiel der Erfindung ist in Figur 2b angegeben.

Dieses Ausführungsbeispiel enthält eine Umschaltvorrichtung 29, die Ansteuerimpulse des elektronischen Steuergerätes 12 über einen Steuereingang enthält. Die Eingänge der Umschaltvorrichtung 29 sind mit den Pluseingängen 15+, 25+, 35+ und den Minuseingängen 15-, 25-, 35- der Endverstärkerstufen 15, 25, 35 verbunden, und der Ausgang der Umschaltvorrichtung 29 ist mit dem Anschlußpunkt 20a verbunden, an den Mittel 22 zur Entstörung, in diesem Ausführungsbeispiel bestehend aus einem Kondensator 22a, angeschlossen sind. Das freie Ende des Kondensators 22a ist mit einem Masseanschlußpunkt 22c verbunden, der gegen Masse geschaltet ist.

Die Funktionsweise des Ausführungsbeispiel gemäß Figur 2b ist durch die Tabelle 3 und durch Figur 6b angegeben.

Tab. 3

| (1 bedeutet Verbindung mit Anschlußpunkt 20a) | | | | | | |
|---|---|---|---|---|---|---|
| Endverst.- Eingang | Zeittakt | | | | | |
| | t1 | t2 | t3 | t4 | t5 | t6 |
| 15 + | 0 | 1 | 0 | 0 | 0 | 0 |
| 15- | 0 | 0 | 0 | 0 | 1 | 0 |
| 25 + | 0 | 0 | 0 | 1 | 0 | 0 |
| 25- | 1 | 0 | 0 | 0 | 0 | 0 |
| 35 + | 0 | 0 | 0 | 0 | 0 | 1 |
| 35- | 0 | 0 | 1 | 0 | 0 | 0 |

Wesentlich ist, daß immer derjenige Eingang, dessen Eingangssignal einen Übergang des entsprechenden Motoransteuersignals bewirkt von -1 zu 0 bzw. von +1 zu 0, an die Mittel 22 zur Entstörung angeschlossen ist.

Zu dem Zeittakt t1 wird der Minuseingang der Endverstärkerstufe 25 mit dem Anschlußpunkt 20a und damit mit dem Kondensator 22a verbunden. Zu dem Zeittakt t2 wird der Pluseingang der Endverstärkerstufe 15 mit dem Kondensator 22a verbunden, usw.

Dabei ist zu beachten, daß das Umschalten erst dann erfolgt, wenn die abgerundeten Signale ihren gewünschten Endwert erreicht haben.

Es sei angemerkt, daß bei Varianten des Ausführungsbeispiels gemäß Figur 2a die verwendeten Mittel 21 zur Entstörung als Teil der (integrierten) Ansteuerschaltung realisiert werden kann.

Weiterhin ist es denkbar, daß bei einer anderen Variante des Ausführungsbeispiels gemäß Figur 2b die Mittel 22 extern, das heißt über eine nicht dargestellt Anschlußbuchse, geschaltet werden können.

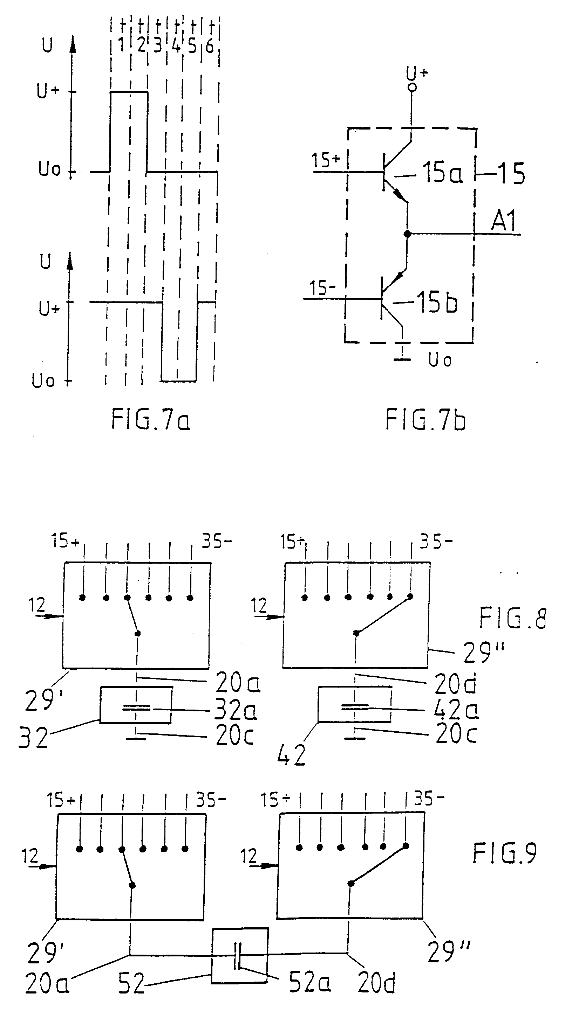

In Figur 7 ist symbolisch eine übliche Realisierung der ersten Endverstärkerstufe dargestellt. Diese enthält eine Transistorendstufe, bestehend aus einem npn-Transistor 15a und einem pnp-Transistor 15b.

Der Kollektor des npn-Transistors 15a ist mit einer positiven Spannung U+ verbunden, die beispielsweise die positive Betriebsspannung des Systems bildet. Die Basis des npn-Transistors 15a ist, direkt oder indirekt, mit dem positiven Eingang 15+ und der Emitter ist mit dem Ausgang der Endverstärkerstufe 15 verbunden, an dem das Motoransteuersignal A1 liegt. Mit diesem Punkt ist ebenfalls der Emitter des pnp-Transistors 15b verbunden, dessen Basis, direkt oder indirekt, zu dem negativen Eingang 15- führt. Dem Kollektor des betrachteten Transistors 15b wird eine Spannung Uo zugeführt, deren Wert negativer als der der Spannung U+ ist, wie beispielsweise die Spannung des Masseanschlusses des Systems.

Ansteuersignale für die Endverstärkerstufe 15 der Figur 7b sind in Figur 7a dargestellt.

Damit das Motoransteuersignal A1 während der Zeittakte t1 - t6 den in Figur 4a gezeigten Verlauf aufweist, liegt während der Zeittakte t1 und t2 an dem positiven Eingang 15+ die Spannung U+ und während der Zeittakte t3 - t6 die Spannung Uo.

An dem negativen Eingang 15- wird während der Zeittakte t1 - t3 die Spannung U+, während t4, t5 die Spannung Uo, und während des Zeittaktes t6 die Spannung U+ angelegt.

Das heißt, daß immer dann, wenn das Motoransteuersignal A1 den Zustand "+1" aufweist, an beiden Eingängen 15+, 15- eine positive Spannung anliegt, die in diesem Ausführungsbeispiel gleich U+ ist. Dadurch wird der npn-Transistor 15a leitend und der pnp-Transistor 15b sperrt.

Für den Zustand "-1" des Signales A1 liegt sowohl am positiven Eingang 15+ als auch am negativen Eingang 15- eine gegenüber U+ negative Spannung an, die in diesem Ausführungsbeispiel mit Uo identisch ist. Dadurch wird der Transistor 15b leitend und der Transistor 15a sperrt.

Für den Zustand "0" des Signales müssen beide Transistoren 15a, 15b sperren. Das wird erreicht, indem am positiven Eingang 15+ die negative Spannung Uo und am negativen Eingang 15- die positive Spannung U+ anliegt.

Es sei darauf hingewiesen, daß Ansteuerungen der Endverstärkerstufen 25, 35 gemäß dem eben dargestellten in Übereinstimmung mit Figur 4b bzw. Figur 4c erfolgen.

Bei einer Realisierung der Endverstärkerstufen 15, 25, 35 gemäß Figur 7 werden die erfindungsgemäßen Varianten der Figur 8 und der Figur 9 dazu verwendet, daß Mittel zur Entstörung mit Eingängen der Endvertärkerstufen 15, 23, 35 verbunden werden, deren Eingangssignale sowohl einen Übergang des entsprechenden Motoransteuersignals A1, A2, bzw. A3 von "+1" nach "0" bzw. "-1" nach "0", als auch umgekehrt bewirken.

Die Figur 8 und die Figur 9 deuten weitere Varianten des bevorzugten Ausführungsbeispiels nach Figur 2b an, die bevorzugt bei einer Realisierung der Endverstärkerstufen 15, 25, 35 verwendet werden, wie sie in Figur 7 angedeutet sind. Stufen und Signale, die die gleiche Funktion ausüben wie in den bereits beschriebenen Ausführungsbeispielen, sind mit gleichen Bezugszahlen gekennzeichnet und auf sie wird nur insofern eingegangen, wie es für das Veratändnis der Erfindung notwendig ist.

In Figur 8 sind eine erste Umschaltvorrichtung 29' und eine zweite Umschaltvorrichtung 29'' dargestellt. Eingänge der Umschaltvorrichtungen 29', 29'' sind, wie in dem Ausführungsbeispiel der Figur 2b, mit den Eingängen der Endverstärkerstufen 15, 25, 35 verbunden. Der Ausgang der ersten Umschaltvorrichtung 29' führt zu einem ersten Anschluß, entsprechend dem Anschlußpunkt 20a, eines ersten Entstörungsmittels 32 und der Ausgang der zweiten Umschaltvorrichtung 29'' führt zu einem ersten Anschluß, entsprechend einem Anschlußpunkt 20d, eines zweiten Entstörungsmittels 42. Zweite Anschlüsse der genannten Entstörungsmittel 32, 42 liegen an Masse, was dem Anschlußpunkt 20c entsprcht. In diesem Ausführungsbeispiel enthalten das erste Entstörungsmittel 32 und das zweite Entstörungsmittel 42 einen ersten Kondensator 32a bzw. einen zweiten Kondensator 42a.

Wesentlich bei der Ansteuerung der Umschaltvorrichtungen 29', 29'' ist, daß nicht nur diejenigen Eingänge der Endverstärkerstufen 15, 25, 35 mit den Entstörmitteln 32, 42 verbunden sind, die einen übergang von einem Zustand, in dem ein Strom eingeprägt wird (+1, -1) zu einem stromlosen Zustand (0) aufweisen, sondern auch diejenigen Eingänge, die einen übergang von "0" nach "+1" oder von "0" nach "-1" aufweisen. Das wird durch geeignete Ansteuersignale des elektronischen Steuergerätes an die Umschaltvorrichtungen 29' bzw. 29'' bewirkt.

Geeignete Ansteuersignale sind in Tabelle 4 angegeben. Danach wird während des Zeittaktes t1 der Eingang 25-, dessen Eingangssignal einen übergang von Uo nach U+ aufweist, über die Umschaltvorrichtung 29' mit dem Kondensator 32a und der Eingang 35-, dessen Eingangssignal einen Übergang von U+ nach Uo aufweist, über die Umschaltvorrichtung mit dem Kondensator 42a verbunden. Während t2 wird Eingang 15+ über Umschaltvorrichtung 29' mit Kondensator 32a und Eingang 25+ über Umschaltvorrichtung 29'' mit Kondensator 42a verbunden, usw.

6

Tabelle 4

| Umsch.-Vorr. / Zeittakt | t1 | t2 | t3 | t4 | t5 | t6 |
|---|---|---|---|---|---|---|
| 29' | 25- | 15 + | 35- | 25 + | 15- | 35 + |
| 29'' | 35- | 25 + | 15- | 35 + | 25- | 15 + |

Wesentlich ist, daß die genannten Kondensatoren 32a, 42a, bzw. allgemein die Entstörungsmittel 32, 42, während der entsprechenden Übergänge mit den genannten Eingängen verbunden sind und daß die Kondensatoren 32a, 42a durch die Eingangssignale immer derart umgeladen werden, daß Spannungssprünge vermieden werden.

So ist beispielsweise der Kondensator 32a nach dem übergang des Zeittaktes t1 positv geladen (U + ). Der anschließende Übergang des Eingangssignales von Eingang 15 + verläuft von U + nach Uo, der darauffolgende Übergang des Eingangssignales von Eingang 35- von Uo nach U + , usw., so daß ein Spannungssprung jeweils vermieden wird. Das gleiche gilt selbstverständlich auch für das Umschalten durch die Umschaltvorrichtung 29''.

Die nächste Variante gemäß Figur 8 weist ebenfalls die Umschaltvorrichtungen 29', 29'' auf. Wesentlich ist hier, daß ein drittes Entstörungsmittel 52, das einen Kondensator 52a enthält, mit seinem ersten Anschluß mit dem Ausgang der ersten Umschaltvorrichtung 29', entsprechend dem Anschlußpunkt 20a, und mit seinem zweiten Anschluß mit dem Ausgang der zweiten Umschaltvorrichtung 29'', entsprechend dem Anschlußpunkt 20d, verbunden ist.

Bei dieser Variante werden diejenigen Eingänge der Endverstärkerstufen 15, 25, 35 mit dem dritten Entstörungsmittel 52 verbunden, die einen übergang von "0" nach " + 1", "0" nach "-1", " + 1" nach "0" oder "-1" nach "0" aufweisen.

Die Ansteuerung der Umschaltvorrichtungen 29', 29''erfolgt durch das elektronische Steuergerät 12 ebenfalls entsprechend Tabelle 4 und dem dort beschriebenen.

Es sei darauf hingewiesen, daß Versionen der Varianten von Figur 7 bzw. Figur 8 auch mit Ausgängen der Endverstärkerstufen verbunden und entsprechend angesteuert werden können.

Es sei erwähnt, daß durch die symbolische Darstellung der Mittel 21, 22 zur Entstörung und der Entstörmittel 32, 42, 52 deren Ausführung nicht beschränkt wird. Die genannten Mittel können statt der erwähnten Bauelemente 21a, 21b, 22a, ... oder zusätzlich zu diesen andere geeignete, dem Fachmann bekannte Bauelemte oder Baugruppen enthalten. Dadurch kann beispielsweise die Funktion eines Integrators verwirklicht werden.

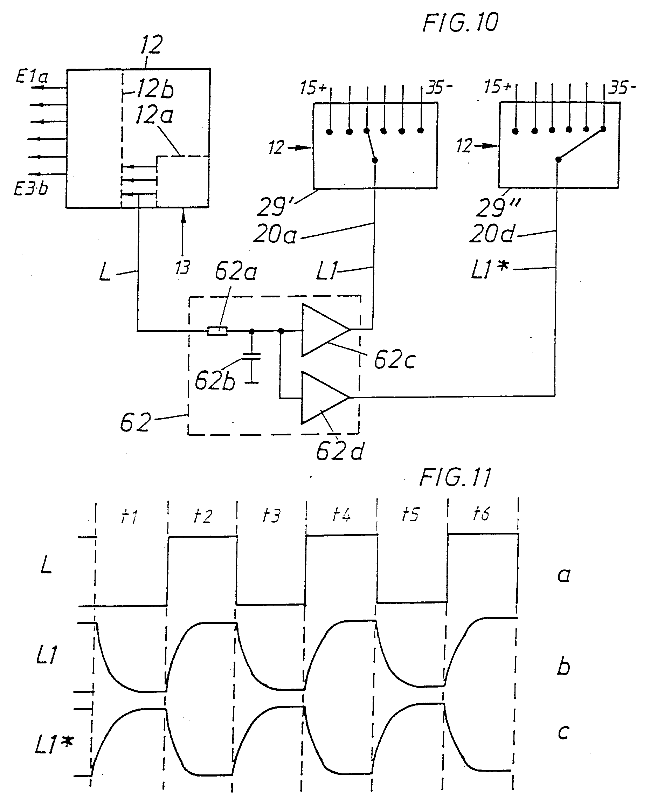

Ein weiteres Ausführungsbeispiel, bei dem Entstörungsmitteldurch Signale des Steuergerätes 12 beeinflußt werden, ist in Fig. 10 angedeutet und wird anschließend anhand von Fig. 11 erläutert.

Dabei wurden Mittel und Signale, die die gleiche Wirkung oder Funktion haben wie in den vorhergehenden Ausführungsbeispielen, wie dort bezeichnet und auf sie soll im folgenden nur insoweit eingegangen werden, wie es für das Verständnis notwendig ist.

In Fig. 10 gezeigte aktive Entstörungsmittel 62 enthalten einen Widerstand 62a, dessen einem Anschluß ein Signal L von dem Steuergerät 12 zugeführt wird und dessen zweiter Anschluß mit einem ersten Anschluß eines Kondensators 62b verbunden ist, dessen zweiter Anschluß an Masse liegt. Weiterhin ist der zweite Anschluß des Widerstandes 62a mit dem Eingang einer Verstärkerstufe 62c und dem Eingang einer Inverterstufe 62d verbunden. Der Ausgang der Verstärkerstufe 62c, führt ein erstes Entstörungssignal L1 zu dem Anschlußpunkt 20a der Umschaltvorrichtung 29' und der Ausgang der Inverterstufe führt ein zweites Entstörungssignal L1* zu dem Anschluß 20d der Umschaltvorrichtung 29''.

Das Signal L, das das Steuergerät 12 an die aktiven Entstörungsmittel 62 abgibt, wird von der Position des Motors 10 abgeleitet und wird in diesem Ausführungsbeispiel aus einem Signal gewonnen, beispielsweise dem "least significant bit" (LSB), das ein Zähler 12a, der das Signal des Sensors 13 empfängt, an einen Dekoder 12b, der die Ansteuersignale E1a, ..., E3b erzeugt, abgibt.

Die Verläufe der Signale L, L1, L1* sind in Fig. 11a, b, bzw. c dargestellt. Die Ansteuerung der Umschaltvorrichtungen 29' und 29'' durch Ansteuersignale des Steuergerätes 12 erfolgt entsprechend Tabelle 4.

Zu Beginn der Zeittakte t1, t2, ... wird das Signal L von dem Zustand "high", entsprechend "1" in den Zustand "low", entsprechend "0", bzw. umgekehrt, geführt. Durch das RC-Netzwerk, bestehend aus dem Widerstand (62a) und dem Kondensator 62b, wird an den Eingängen der Stufen 62c, 62d ein Spannungsverlauf verursacht, der zu den Ausgangssignalen, d.h. zu den Entstörungssignalen, L1, bzw. L1* führt, wie sie in Fig. 11a bzw. 11b dargestellt sind.

Das Signal L1 wird während des Zeittaktes t1, genauer gesagt nachdem L1 den Spannungswert Uo angenommen hat, über die Umschaltvorrichtung 29' mit dem Eingang 25- verbunden. Das an diesem Eingang anliegende Eingangssignal weist zu Beginn des Taktes t2 einen Übergang von Uo nach U+ auf, der durch das Signal L1 entsprechend abgerundet wird.

Das Entstörungssignal L1* wird während des Taktes t1 über die Umschaltvorrichtung 29'' mit dem Eingang 35- verbunden, wodurch das entsprechende Signal, das zu Beginn von t2 einen Übergang von Uo nach U+ aufweist, entsprechend abgerundet wird.

Während der anschließenden Zeittakte t2, t3, ... geschieht die Ansteuerung der Umschaltvorrichtungen 29', 29'' gemäß Tabelle 4. Dabei ist wesentlich, daß immer derjenige der Eingänge 15+, ..., 35- mit einem der Entstörungssignale L1, L1* zumindest zu dem Zeitpunkt verbunden ist, an dem dessen Eingangssignal einen Übergang (Uo - U+) analog zu dem entsprechenden Entstörungssignal L1 bzw. L1* aufweist.

In einer Variante dieses Ausführungsbeispiels kann das aktive Entstörungsmittel 62 als Block gestaltet sein, der die gleiche Funktion ausübt, jedoch andere Bauelemente, wie beispielsweise Digital/Analog-Wandler, usw. enthält. Diese können die Funktion des R/C-Netzwerkes, bestehend aus dem Widerstand 62a und dem Kondensator 62b, oder auch der Verstärkerstufen 62c, 62d zumindest teilweise ersetzen.

Denkbar ist weiterhin, daß das von dem Steuergerät 12 abgegebene Signal L bereits eine abgerundete Form aufweist, was durch geeignete Mittel (R/C-Netzwerk, D/A-Wandler, ...) immerhalb des Steuergerätes erfolgen kann, so daß dieses Signal L direkt der Verstärkerstufe 62c und der Inverterstufe 62d zugeführt werden kann.

Es sei darauf hingewiesen, daß eine Ansteuerung von Entstörungsmitteln durch das Steuergerät 12 auch auf andere Weise erfolgen kann.

So ist es möglich, daß Stufen oder Bauelemente, die Teil der betrachteten Entstörungsmittel sind, in ihren Eigenschaften durch das entsprechende Ansteuersignal variiert werden, wodurch eine weitere Abschwächung von Störimpulsen erzielt werden kann. Als mögliche Variation durch das Ansteuersignal ist beispielsweise eine Umschaltung, Parallel- oder Reihenschaltung einzelner Bauelemente denkbar.

Diese Umschaltung kann beispielsweise von außen vorgegeben werden, wodurch eine Reduzierung von Störimpulsen erzielt werden kann, die dem verwendeten Typ des Motors 10 angepaßt ist.

Auch ist es denkbar, daß die Umschaltung aufgrund eines adaptiven Verfahrens bestimmt wird.

Weitere Versionen der genannten Ausführungsbeispiele können zumindest eine der folgenden Varianten enthalten:

- Es können mehr als drei Endverstärkerstufen (Ausgangsendstufen) vorgesehen sein, so daß Motoren mit mehr als drei Strängen oder aber mehrere Motoren angesteuert werden können. In diesem Fall ist eine Umschaltung von Mitteln zur Entstörung entsprechend vorzunehmen, wobei eventuell mehr als eines dieser Mittel vorgesehen werden muß;

- statt eines Elektromotors mit Sternkonfiguration, wie in der Zeichnung dargestellt, können auch andere mehrsträngige Elektromotoren, bei denen beispielsweise die einzelnen Stränge in Reihe geschaltet sind, sowie auch einsträngige Elektromotoren angesteuert werden;

- das elektronische Steuergerät 12 kann ersetzt werden durch sonstige geeignete Steuereinheiten, welche beispielsweise mechanisch, optisch und/oder elektrisch arbeiten;

- der Sensor 13 kann ersetzt werden durch andere geeignete Sensoren zur Erfassung der Drehzahl n und/oder der Position p. Diese Sensoren können mechanisch, elektrisch und/oder magnetisch, beispielsweise als Hallsensor oder durch die Stränge des anzusteuernden Motors 10, gestaltet sein. Die abgegebenen Signale sind dann entsprechend zu verarbeiten.

Damit wird durch die Erfindung insgesamt ein System, bestehend aus einem Verfahren und einer zur Durchführung des Verfahrens geeigneten Vorrichtung, zur Ansteuerung eines Elektromotors vorgestellt, das es erlaubt, die Anzahl der Mittel zur Entstörung, auch Entstörungsmittel genannt, zu verringern ohne die Dämpfung von Störimpulsen zu verringern.

Die Mittel zur Entstörung bzw. die Enstörungsmittel können Bauelemente enthalten, wie beispielsweise Widerstände, Kondensatoren, Halbleiterbauelemente, die eine vorgegebene Dämpfungsfunktion als R/C-Glieder, als Integratoren oder dergleichen ausführen.

Dabei können einzelne dieser Bauelemente auch für weitere Funktionen, wie beispielsweise als Teil von Vorverstärkerstufen oder Endverstärkerstufen, verwendet werden.

Die Reduzierung der Anzahl an Mitteln zur Entstörung wird erreicht, indem in Abhängigkeit vom Ansteuersignal des Motors eine verminderte Anzahl von Mitteln zur Entstörung derart geschaltet wird, daß bei Übergängen in denen Störimpulse verursacht werden, die Mittel zur Entstörung zumindest teilweise entsprechend geschaltet sind.

Durch die Reduzierung der genannten Mittel zur Entstörung hat die Erfindung besonders den Vorteil, daß die Integrationsdichte erhöht werden kann oder aber bei einer externen Beschaltung die Anzahl an externen Anschlüssen verringert werden kann.

**Patentansprüche**

1. Verfahren zur Abschwächung von Störimpulsen bei einer Ansteuerung eines Elektromotors mit einem oder mehreren Strängen durch von Ansteuersignalen (E1a, ..., E3b) verursachte Motoransteuersignale (A1, A2, A3) mit Hilfe von Mitteln zur Entstörung, dadurch gekennzeichnet, daß zumindest einzelne der Mittel zur Entstörung in Abhängigkeit von der Position des Elektromotors und/oder von Zuständen der Motoransteuersignale (A1, A2, A3) bzw. der Ansteuersignale (E1a,..., E3b) mit vorgegebenen Anschlußpunkten verbunden werden.

2. Verfahren nach Anspruch 1, dadurch gekennzeichnet, daß jedem Strang eines der genannten durch zugeordnete Ansteursignale (E1a, E1b; E2a, E2b; bzw. E3a, E3b) verursachte Motoransteuersignale (A1, A2, A3) zugeordnet ist, das folgende der genannten Zustände zyklisch aufweist: dem zugeordneten Strang wird
   - ein einem vorgegebenem Drehmoment entsprechender Strom einer ersten Richtung eingeprägt,
   - kein Strom eingeprägt,
   - ein dem vorgegebenem Drehmoment entsprechender Strom einer zweiten Richtung eingeprägt,
   und daß die Mittel zur Entstörung bei einem Übergang von einem der genannten Zustände zu einem der anderen genannten Zustände und/oder einem entsprechenden Übergang der Ansteuersignale (E1a, E1b; E2a, E2b; bzw. E3a, E3b) mit den vorgegebenen Anschlußpunkten verbunden sind.

3. Verfahren nach einem der Ansprüche 1 oder 2, dadurch gekennzeichnet, daß für die Mittel zur Entstörung ein erster der vorgegebenen Anschlußpunkte dem Bezugspotential und weitere der vorgegebenen Anschlußpunkte Eingängen und/oder Ausgängen von verwendeten Endverstärkerstufen zur Motoransteuerung entsprechen.

4. Verfahren nach einem der Ansprüche 1 oder 2, dadurch gekennzeichnet, daß für die Mittel zur Entstörung erste der vorgegebenen Anschlußpunkte ersten vorgegeben Eingängen bzw. Ausgängen von verwendeten Endverstärkerstufen und weitere der vorgegeben Anschlußpunkte weiteren vorgegeben Eingängen bzw. Ausgängen der verwendeten Endverstärkerstufen entsprechen.

5. Verfahren nach einem der Ansprüche 1 bis 4, dadurch gekennzeichnet, daß die Mittel zur Entstörung während eines stromlosen Zustandes mit den vorgegebenen Anschlußpunkten verbunden werden.

6. Verfahren nach einem der Ansprüche 1 bis 5, dadurch gekennzeichnet, daß die Mittel zur Entstörung derart angesteuert werden, daß sie die Signale, die an den vorgegebenen Anschlußpunkten anliegen, derart beeinflussen, daß Störimpulse optimal abgeschwacht werden.

7. Verfahren nach Anspruch 6, dadurch gekennzeichnet, daß die Ansteuerung der Mittel zur Entstörung in Abhängigkeit von dem Typ des verwendeten Motors und/oder von der Anzahl der verwendeten Motoren erfolgt, was von außen vorgegeben werden kann und/oder durch adaptive Verfahren bestimmt werden kann.

8. Vorrichtung zur Abschwächung von Störimpulsen, die Mittel (16, 26, 36; 17, 18, 27, 28, 37, 38) zur Entstörung aufweist, und einer Ansteuervorrichtung (11) zur Ansteuerung eines Elektromotors (10) mit einem oder mehreren Strängen zugeordnet ist, welche dem Elektromotor (10) Motoransteuersignale (A1, A2, A3) zuführt die bestimmt werden aus Ansteuersignalen (E1a, ..., E3b), die von einer Steuereinheit (12) abgegeben werden, dadurch gekennzeichnet, daß die Steuereinheit (12) mindestens eine Umschaltvorrichtung (19, 29; 29', 29'') derart ansteuert, daß in Abhängigkeit von der Position (p) des Elektromotors (10) und/oder von Zuständen der Motoransteuersignale (A1, A2, A3) bzw. der Ansteuersignale (E1a, ..., E3b) zumindest einzelne der Mittel (16, 26, 36; 17, 18, 27, 28, 37; 38; bzw. 21, 22, 32, 42, 52, 62) zur Entstörung mit vorgegebenen Anschlußpunkten (20a, 20b, 20c) verbunden werden.

9. Vorrichtung nach Anspruch 8, dadurch gekennzeichnet, daß die Ansteuervorrichtung (11) für jeden Strang jeweils eine Endverstärkerstufe (15, 25, 35) aufweist, die dem zugeordneten Strang in Abhängigkeit von zugeordneten Ansteuersignalen (E1a, E1b; E2a, E2b; bzw. E3a, E3b) eines der genannten Motoranteursignale (A1, A2, A3) zuführt, welches folgende der genannten Zustände zyklisch aufweist: dem zugeordneten Strang wird

- ein einem vorgegebenem Drehmoment entsprechender Strom einer ersten Richtung eingeprägt,
- kein Strom eingeprägt,
- ein dem vorgegebenem Drehmoment entsprechender Strom einer zweiten Richtung eingeprägt,

und daß die Steuereinheit (12) die Umschaltvorrichtung (19, 29, 29', 29'') derart ansteuert, daß die Mittel (16, 26, 36; 17, 18, 27, 28, 37, 38; bzw. 21, 22; 32, 42, 52) zur Entstörung bei einem Übergang von einem ersten der Zustände zu einem weiteren der Zustände und/oder einem entsprechenden Übergang der Ansteuersignale (E1a, E1b; E2a, E2b; bzw. E3a, E3b) mit den vorgegebenen Anschlußpunkten (20a, 20b; 20c) verbunden sind.

10. Vorrichtung nach einem der Ansprüche 8 oder 9, dadurch gekennzeichnet, daß ein erster der vorgegebenen Anschlußpunkte (20b, 20c) dem Bezugspotential und weitere der vorgegebenen Anschlußpunkte (20a) Eingängen und/oder Ausgängen von verwendeten Endverstärkerstufen zur Motoransteuerung entsprechen.

11. Vorrichtung nach einem der Ansprüche 8 bis 10, dadurch gekennzeichnet, daß für die Mittel (16, 26, 36; 17, 18, 27, 28, 37, 38; bzw. 21, 22; 32, 42, 52, 62) zur Entstörung erste der vorgegebenen Anschlußpunkte (20a) ersten vorgegeben Eingängen bzw. Ausgängen von verwendeten Endverstärkerstufen (15, 25, 35) und weitere der vorgegeben Anschlußpunkte (20d) weiteren vorgegeben Eingängen bzw. Ausgängen der verwendeten Endverstärkerstufen (15, 25, 35) entsprechen.

12. Vorrichtung nach einem der Ansprüche 8 bis 11, dadurch gekennzeichnet, daß die Mittel (16, 26, 36; 17, 18, 27, 28, 37, 38; bzw. 21, 22; 32, 42, 52, 62) zur Entstörung während eines stromlosen Zustandes mit den vorgegebenen Anschlußpunkten verbunden werden.

13. Vorrichtung nach einem der Ansprüche 8 bis 12, dadurch gekennzeichnet, daß die Steuereinheit (12) Steuersignale (L) an die Mittel (16, 26, 36; 17, 18, 27, 28, 37, 38; bzw. 21, 22; 32, 42, 52, 62) zur Entstörung abgibt, wodurch diese derart angesteuert werden, daß sie die Signale, die an den vorgegebenen Anschlußpunkten (20a, 20b, 20c) anliegen, derart beeinflussen, daß Störimpulse optimal abgeschwächt werden.

14. Vorrichtung nach einem der Ansprüche 8 bis 13, dadurch gekennzeichnet, daß ansteuerbare Mittel (62) zur Entstörung eine Verstärkerstufe (62c) und eine invertierende Verstärkerstufe (62d) aufweisen, an deren Eingängen Abrundungsmittel (62a, 62b) geschaltet sind, wodurch die Ausgangssignale der Verstärkerstufen (62c, 62d) einen Verlauf aufweisen, die eine optimale Abschwächung von Störimpulsen bewirken.

15. Vorrichtung nach einem der Ansprüche 8 bis 14, dadurch gekennzeichnet, daß die Abrundungsmittel (62a, 62d) als Kombination aus einem Widerstands (62a)/Kondensator (62b) - Netzwerk und/oder Digital/Analog-Wandler gestaltet sind.

16. Vorrichtung nach einem der Ansprüche 13 oder 15, dadurch gekennzeichnet, daß die Mittel (62) zur Entstörung in Abhängigkeit von dem Typ des verwendeten Motors (10) und/oder von der Anzahl der verwendeten Motoren erfolgt, was mittels einer Eingabevorrichtung von außen vorgegeben werden kann und/oder durch adaptive Verfahren bestimmt werden kann.

FIG.1a

FIG. 1b

FIG.2a

FIG.2b

FIG.3

FIG.4

FIG.5

FIG.6

FIG.7a

FIG.7b

FIG.8

FIG.9

16

FIG.10

FIG.11

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 316 077 (SONY CORP)<br>* Zusammenfassung; Abbildung 1 *<br>--- | 1,8 | H02P6/02 |
| A | GB-A-2 188 801 (SGS)<br>* Zusammenfassung; Abbildung 2 *<br>--- | 1,8 | |
| A | IEEE TRANSACTIONS ON ENERGY CONVERSION<br>Bd. 5, Nr. 3, September 1990, NEW YORK, US<br>Seiten 558 - 564;<br>S.D. SUDHOFF ET AL: 'OPERATING MODES OF THE<br>BRUSHLESS DC MOTOR WITH A 120 GRADE INVERTER'<br>* Zusammenfassung *<br><br>----- | 1,2,8 | |
| | | | **RECHERCHIERTE SACHGEBIETE (Int. Cl.5)**<br><br>H02P |

Der vorliegende Recherchenbericht wurde für alle Patentansprüche erstellt

| Recherchenort | Abschlußdatum der Recherche | Prüfer |
|---|---|---|
| DEN HAAG | 04 MAI 1992 | BEYER F. |

EPO FORM 1503 03.82 (P0403)